(19) **Europäisches Patentamt / European Patent Office / Office européen des brevets**

(11) **EP 2 666 082 B1**

(12) **EUROPEAN PATENT SPECIFICATION**

(45) Date of publication and mention
of the grant of the patent:
**13.03.2019 Bulletin 2019/11**

(21) Application number: **11855941.8**

(22) Date of filing: **21.01.2011**

(51) Int Cl.:
*G06F 7/57* (2006.01)     *G06F 9/30* (2018.01)

(86) International application number:
**PCT/IB2011/050275**

(87) International publication number:
**WO 2012/098435 (26.07.2012 Gazette 2012/30)**

(54) **INTEGRATED CIRCUIT DEVICE AND METHOD FOR CALCULATING A PREDICATE VALUE**

INTEGRIERTE SCHALTUNG UND VERFAHREN ZUR BERECHNUNG EINES PRÄDIKTIVEN WERTES

DISPOSITIF DE CIRCUIT INTÉGRÉ ET PROCÉDÉ DE CALCUL D'UNE VALEUR DE PRÉDICAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.11.2013 Bulletin 2013/48**

(73) Proprietor: **NXP USA, Inc.**
**Austin TX 78735 (US)**

(72) Inventors:
• **PELED, Yuval**
 **55022 Kiryat Ono (IL)**
• **BARAK, Itzhak**
 **60920 Kadima (IL)**

• **ROZENBERG, Idan**
 **Raanana (IL)**
• **SCHUPPER, Doron**
 **76656 Rehovot (IL)**
• **VASKEVICH, Lev**
 **76287 Rehovot (IL)**

(74) Representative: **Krott, Michel**
**NXP Semiconductors**
**Intellectual Property Group**
**High Tech Campus 60**
**5656 AG Eindhoven (NL)**

(56) References cited:
**WO-A1-91/20027      KR-A- 20060 006 551**
**US-A1- 2002 199 091   US-A1- 2004 088 525**
**US-A1- 2008 021 942   US-B1- 6 658 558**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field of the invention</u>

The field of this invention relates to an integrated circuit device and a method for calculating a predicate value.

<u>Background of the invention</u>

In the field of computer architecture design, it is known for branch predication to be used for mitigating the processing costs that are typically associated with conditional branches of software code, in particular branches to short sections of code. Branch predication is achieved by allowing each instruction to conditionally either perform an operation or do nothing. With branch predication, each instruction is associated with a predicate and will only be executed if the predicate is 'true'. In this manner all possible branch paths may be followed within the processing pipeline, with the 'correct' path being 'kept' (executed) and all other paths being discarded based on the predicate values. The main purpose of predication is to avoid jumps over small sections of program code, thereby increasing the effectiveness of pipelined execution and avoiding problems with caching. In addition, functions that are traditionally computed using simple arithmetic and bitwise operations may be quicker to compute using predicated instructions. Furthermore, predicated instructions with different predicates can be combined with unconditional code, thereby allowing better instruction scheduling and, thus, better performance. Further still, predication enables elimination of unnecessary branch instructions, thereby making the execution of unnecessary branches, such as those that make up loops, faster by lessening the load on branch prediction mechanisms.

Predicates are also used to control conditional execution of instructions, and as such their respective conditions are required to be calculated in order for the predicate values to be set. Complex conditions require calculating complex Boolean functions. Typically, such calculations are performed over several cycles. For example, performing such complex calculations may comprise moving predicate registers to general purpose registers and using the CPU's (Central Processing Unit's) execution units to perform the calculations before moving the results back to the predicate registers. Alternatively, the CPU may provide a predetermined set of Boolean operations that may be performed directly on the contents of the predicate registers.

Applications are becoming increasingly more demanding in their requirements for the efficiency of processing devices, such as CPUs and the like, to execute application program code. Accordingly, there is an increasing need for CPUs and the like to minimise the number of cycles required to execute instructions, including in the case of branch predication minimizing the number of cycles required to perform conditional calculations and/or the number of predicates used, which can accelerate control code performance. US 2008021942 discloses a predicate generation processor, wherein a result vector is part of the predicate calculation unit and does not form part of the predicate calculation instruction.

<u>Summary of the invention</u>

The present invention provides an integrated circuit device and a method for calculating a predicate value as described in the accompanying claims.

Specific embodiments of the invention are set forth in the dependent claims.

These and other aspects of the invention will be apparent from and elucidated with reference to the embodiments described hereinafter.

<u>Brief description of the drawings</u>

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified block diagram of an example of part of a instruction processing module.
FIG. 2 illustrates a simplified example of a predicate calculation module.
FIG. 3 illustrates a relationship between a Boolean function, truth table and result vector.
FIG's 4 and 5 illustrate simplified flowcharts of an example of a method for calculating a predicate value.

<u>Detailed description</u>

Examples of the present invention will now be described with reference to an example of an instruction processing architecture, such as a central processing unit (CPU) architecture. However, in other examples, the present invention may not be limited to the specific instruction processing architecture herein described with reference to the accompanying drawings, and may equally be applied to alternative architectures. For the illustrated example, an instruction processing architecture is provided that comprises separate data and address registers. However, in some examples, separate address registers need not be provided, as data registers may be used to provide address storage. Furthermore, for the illustrated examples, the instruction processing architecture is shown as comprising four data execution units. Some examples of the present invention may equally be implemented within an instruction processing architecture comprising any number of data execution units, and not necessarily four. Additionally, because the illustrated example embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

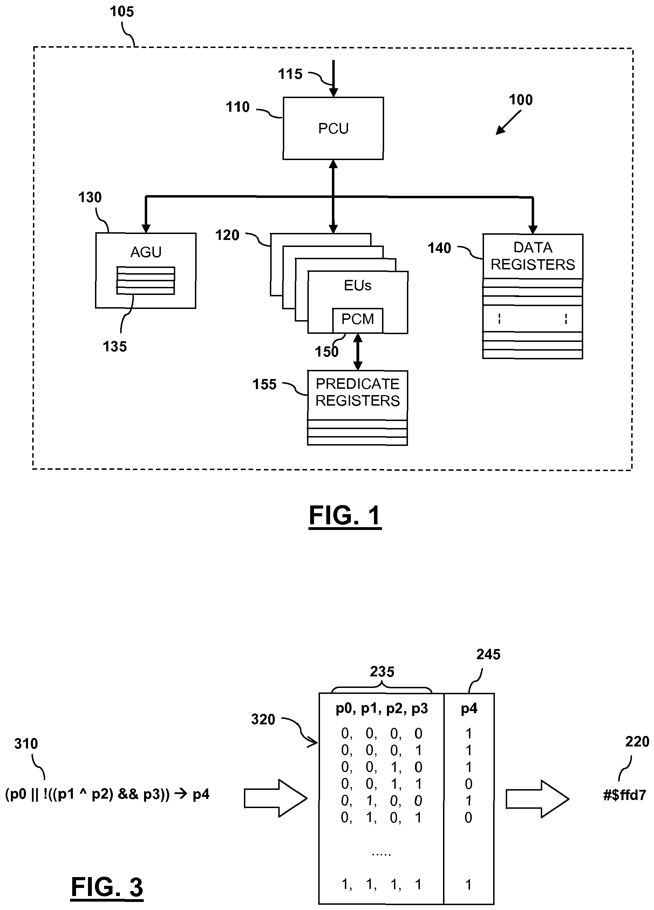

Referring first to FIG. 1, there is illustrated a simplified block diagram of an example of part of an instruction processing module 100 adapted in accordance with some example embodiments of the present invention. For the illustrated example, the instruction processing module 100 forms a part of an integrated circuit device, illustrated generally at 105, and comprises at least one program control unit (PCU) 110, one or more execution unit modules 120, at least one address generation unit (AGU) 130 and a plurality of data registers, illustrated generally at 140. The PCU 110 is arranged to receive instructions to be executed by the instruction processing module 100, as illustrated generally at 115, and to cause an execution of operations within the instruction processing module 100 in accordance with the received instructions. For example, the PCU 110 may receive an instruction, for example stored within an instruction buffer (not shown), where the received instruction requires one or more operations to be performed on one or more bits/bytes/words/etc. of data. A data 'bit' typically refers to a single unit of binary data comprising either a logic '1' or logic '0', whilst a 'byte; typically refers to a block of 8 bits. A data 'word' may comprise one or more bytes of data, for example two bytes (16 bits) of data, depending upon the particular DSP architecture. Upon receipt of such an instruction, the PCU 110 generates and outputs one or more micro-instructions and/or control signals to the various other components within the instruction processing module 100, in order for the required operations to be performed. The AGU 130 is arranged to generate address values for accessing system memory (not shown), and may comprise one or more address registers as illustrated generally at 135. The data registers 140 provide storage for data fetched from system memory, and on which one or more operation(s) is/are to be performed, and from which data may be written to system memory. The execution modules 120 are arranged to perform operations on data (either provided directly thereto or stored within the data registers 140) in accordance with micro-instructions and control signals received from the PCU 110. As such, the execution modules 120 may comprise arithmetic logic units (ALUs), etc.

As previously mentioned, applications are becoming increasingly more demanding in their requirements for the efficiency of processing devices such as CPUs and the like to execute application program code. Accordingly, there is an increasing need for CPUs and the like to minimise the number of cycles required to execute instructions, including in the case of branch predication minimizing the number of cycles required to perform condition calculation and/or the number of predicates used, which can accelerate control code performance.

Thus, in accordance with an example embodiment of the present invention, the instruction processing module 100 may be arranged to perform branch predication, and comprises at least one predicate calculation module arranged to receive, as inputs, at least one result vector for a predicate function and at least one conditional parameter value therefore. The instruction processing module 100 may also be arranged to output a predicate value from the result vector based at least partly on the at least one received conditional parameter value. For the illustrated example, the at least one predicate calculation module forms an integral part of an execution module 120, and is illustrated generally at 150. As such, it is contemplated that one or more of the execution module 120 may comprise such a predicate calculation module. However, in other examples, one or more predicate calculation modules may additionally and/or alternatively be provided as discrete (stand alone) functional units within the instruction processing module 100.

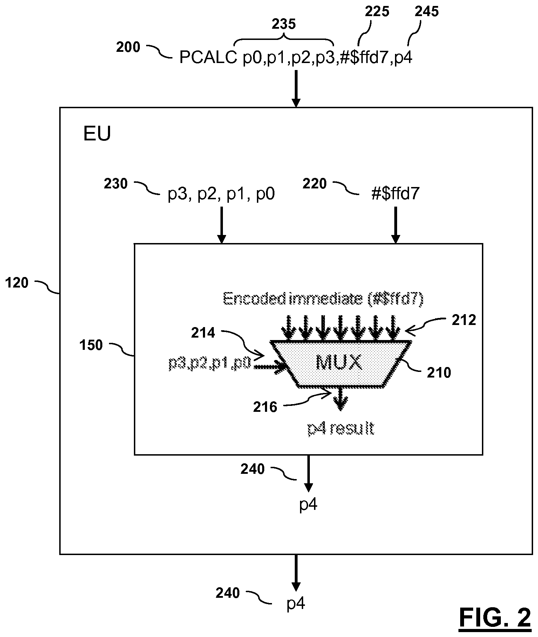

FIG. 2 illustrates a simplified example of a predicate calculation module 150 adapted in accordance with some example embodiments of the present invention. For the illustrated example the predicate calculation module 150 forms an integral part of an execution module 120, and is arranged to receive as inputs at least one result vector 220 for a predicate function and at least one conditional parameter value(s) 230 therefor, and to output a predicate value 240 from the result vector 220 based at least partly on the received at least one conditional parameter value 230. For the specific example illustrated in FIG. 2, the predicate calculation module 150 is in a form of multiplexing circuitry illustrated generally at 210. The multiplexing circuitry 210 comprises a first set of inputs, illustrated generally at 212, arranged to receive the at least one result vector 220, and a second set of inputs, illustrated generally at 214, arranged to receive the at least one conditional parameter value(s) 230. The multiplexing circuitry 210 further comprises an output, illustrated generally at 216, arranged to output the predicate value 240 from the at least one result vector 220 in accordance with the one or more conditional parameter values 230.

Predicates are used to control conditional execution of instructions, and as such their respective conditions are required to be calculated in order for the predicate values to be set. Complex conditions require calculating complex Boolean functions. An example of such a Boolean function may comprise:

$$(p0 \,||\, !((p1 \wedge p2)\, \&\&\, p3)) \rightarrow p4 \qquad\qquad [1]$$

where **p0**, **p1, p2** and **p3** represent predicate registers containing conditional parameter values within the function, and **p4** represents a predicate register into which the result of the function is to be loaded.

Conventionally, such calculations are performed over several cycles. For example, performing such calculations may comprise moving the conditional parameter values from predicate registers to general purpose registers and using one or more execution modules to perform the calculations over several execution cycles, before moving the results back to the predicate registers. Alternatively, the execution modules may comprise a predetermined set of Boolean operations that may be performed directly on the contents of the predicate registers. In either case, the above function is required to be calculated as follows:

```
XOR p1, p2, p2
AND p2, p3, p2
NOT p2, p2
OR p2, p0, p4
```

Thus, for such conventional implementations, four execution cycles are required to calculate a result for the above function.

Conversely, for the illustrated example of the present invention, by encoding the possible results for such a function within the at least one result vector 220, and outputting the appropriate predicate value 240 from the at least one result vector 220 in accordance with the one or more conditional parameter values 230, a predicate value may be advantageously calculated in a single execution cycle.

For example, and as illustrated in FIG. 3, a Boolean function, such as the Boolean function illustrated at 310, may be expressed in terms of its truth table, as illustrated generally at 320. The truth table 320 may comprise a column for each of the conditional parameter values 230 of the Boolean function 310, and a column for the result value 240 of the function. Each row of the truth table 320 may comprise one possible permutation of the at least one conditional parameter value(s) 230, and the appropriate result value 240 for that permutation of the at least one conditional parameter value(s) 230, with the truth table 320 comprising all possible permutations of the conditional parameter values for the Boolean function 310. In this manner, the result column of the truth table comprises a result value 240 for every permutation of conditional parameter values 230, which may be used to provide a result vector for the Boolean function 310, such as illustrated at 220 as a hexadecimal value in FIG. 3.

Thus, by providing such a result vector 220 to the predicate calculation module 150 along with a current permutation of the at least one conditional parameter value(s) 230, the at least one conditional parameter value(s) 230 may be used as selectors within the predicate calculation module 150, for selecting the appropriate predicate result value 240 from the at least one result vector 220 for that permutation of the at least one conditional parameter value(s) 230.

Typically, each permutation of the at least one conditional parameter value(s) 230 may be represented within the truth table 320 as a string of **n** bits, and thus interpreted as a binary number of **n** bits. In this manner, each permutation of the at least one conditional parameter value(s) 230 may be interpreted as comprising a unique binary number of **n** bits. By ordering the permutations of the at least one conditional parameter value(s) 230 in, say, ascending values within the truth table 320, a systematic and predictable ordering of all $2^n$ possible permutations of conditional parameter values 230, and thereby of all $2^n$ possible result values 240 within the result vector 220 may be achieved. As a result, the predicate calculation module 150 may be configured to systematically and predictably select the appropriate predicate result value 240 from the result vector 220 provided thereto, based on the received at least one conditional parameter value(s) 230.

In accordance with some example embodiments of the present invention, the at least one result vector 220, or at least an indication thereof, together with the one or more conditional parameter values 230, or at least an indication thereof, may be encoded within a single predicate calculation instruction, such as illustrated at 200 in FIG. 2, to be executed by the execution module 120. For example, such a single predicate calculation instruction 200 may comprise the at least one result vector 220 and the one or more conditional parameter values encoded directly therein. In this manner, the execution module 120 may be arranged, upon receipt of such a single predicate calculation instruction 200, to extract the at least one result vector 220 and the one or more conditional parameter values 230, and to provide the extracted result vector 220 and the one or more conditional parameter value(s) 230 to the predicate calculation module 150.

Conversely, in other examples, the single predicate calculation instruction 200 may additionally and/or alternatively comprise, say, one or more register identifiers for identifying one or more registers containing the at least one result vector 220 and/or one or more conditional parameter value(s) 230. Such registers may comprise general purpose data registers, such as illustrated at 140 in FIG. 1, or may comprise dedicated predicate registers, such as illustrated at 155 in FIG. 1. Accordingly, upon receipt of such a predicate calculation instruction 200, the execution module 120 may be arranged to extract such register identifiers therefrom, to retrieve the at least one result vector 220 and/or one or more conditional parameter value(s) 230 from the identified register(s) and to provide the extracted/retrieved at least one result vector 220 and the one or more conditional parameter value(s) 230 to the predicate calculation module 150. In a still further alternative example, one or more conditional parameter value(s) 230 may be provided within defined registers.

Accordingly, such a predicate calculation instruction 200 may only comprise a result vector encoded therein (or a register identifier therefor), and the execution module 120 may be arranged, upon receipt of such a predicate calculation instruction 200, to extract the encoded at least one result vector 220 from the received predicate calculation instruction 200 (or retrieve the at least one result vector 220 from the register identified therein), and to retrieve the one or more conditional parameter value(s) 230 from the defined registers.

For the illustrated example, the predicate calculation instruction 200 further comprises an indication 245 of a storage location at which the predicate value is to be stored. For example, such a storage location may comprise a general purpose data register, such as illustrated at 140 in FIG. 1, or may comprise a dedicated predicate register, such as illustrated at 155 in FIG. 1. Accordingly, the execution module 120 may be further arranged, upon receipt of such a predicate calculation instruction 200, to extract the indication 245 of the at least one storage location and, upon output of the predicate result value 240 by the at least one predicate calculation module 150, store the predicate result value 240 within the storage location in accordance with the extracted indication 245.

Substantially any Boolean function is capable of being represented by way of a truth table. Accordingly, a predicate calculation module 150, as hereinbefore described with reference to the accompanying drawings, is capable of calculating a predicate result value 240 for substantially any Boolean function for which it is provided an appropriate result vector 220, with the only substantial limitation being the number $n$ of the one or more conditional parameter value(s) 230 and the size ($2^n$) of the at least one result vector 220 that the predicate calculation module 150 is capable of receiving. Furthermore, only a single predicate calculation instruction 200 and a single execution cycle are required for calculating the predicate result value 240, irrespective of the complexity of the underlying Boolean function. Accordingly, such a predicate calculation module 150 may enable substantially any predicate result value 240 to be calculated (for Boolean functions comprising up to $n$ conditional parameters) using only a single predicate calculation instruction 200, and requiring only a single execution cycle, irrespective of the complexity of the underlying Boolean function.

In some examples, a predicate calculation module 150 may be implemented by way of multiplexing circuitry, as generally illustrated in FIG. 1. Accordingly, such a predicate calculation module 150 may comprise a low hardware cost to be implemented. Furthermore, because the underlying Boolean function required for calculating the predicate value is represented within the at least one result vector 220, only a single, compact predicate calculation instruction need be included within the execution module instruction set in order to enable a calculation of substantially any predicate result value 240 (for Boolean functions comprising up to $n$ conditional parameters), irrespective of the complexity of the underlying Boolean function.

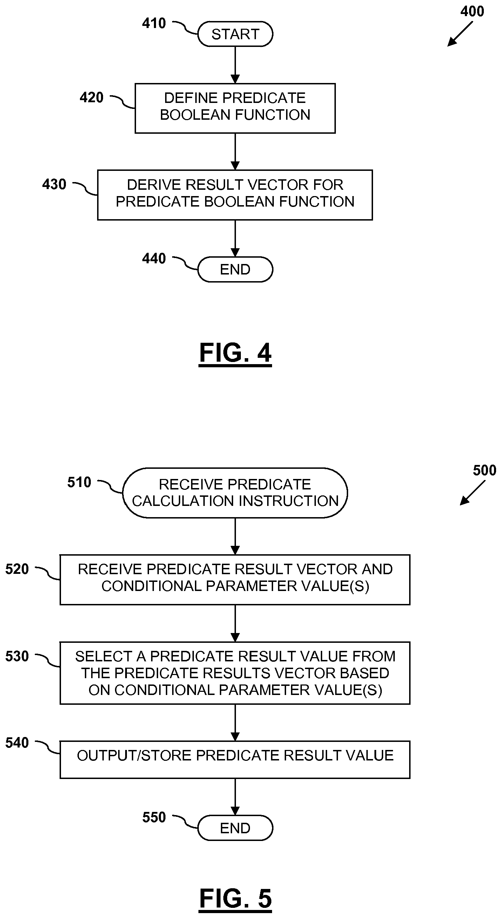

FIG's 4 and 5 illustrate simplified flowcharts 400, 500 of an example of a method for calculating a predicate value for use during branch predication within an instruction processing module, for example as may be implemented within the instruction processing module 100 of FIG. 1. Referring first to FIG. 4, there is illustrated a simplified flowchart 400 of an example of a first part of a method in which a result vector for a Boolean function for calculating a predicate value is derived. This first part of the method starts at step 410, and moves on to step 420 where a Boolean function for the calculating the predicate value is defined. Next, at step 430, a result vector is derived such that the result vector comprises result values for all permutations of conditional parameter values for the defined Boolean function. For example, as illustrated in FIG. 3, the result vector may be derived from a result column of a truth table for the defined Boolean function. The method then ends, at step 440.

Referring now to FIG. 5, there is illustrated a simplified flowchart 500 of an example of a further part of the method in which a predicate result value is calculated. This further part of the method starts at step 510 with a receipt of a predicate calculation instruction, for example such as the predicate calculation instruction 200 of FIG. 2. Next, at step 520, a result vector and at least one conditional parameter value is/are received. For example, the result vector and/or conditional parameter value(s) may be encoded within the received instruction, and thus may simply be extracted therefrom. Alternatively, in one example, step 520 may comprise retrieving the result vector and/or one or more conditional parameter value(s) from one or more registers identified within the received instruction and/or predefined registers. The method then moves on to step 530 where a predicate result value is selected from the at least one result vector based on the at least one conditional parameter value(s). The selected predicate result value is then output or stored (for example within a register identified within the received instruction) in step 540, and the method ends at step 550.

In the foregoing specification, the invention has been described with reference to specific examples of embodiments of the invention. It will, however, be evident that various modifications and changes may be made therein without departing from the broader scope of the invention as set forth in the appended claims.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, and as previously mentioned, for the illustrated examples the predicate calculation module 150 has been illustrated and described as comprising an integral part of an execution module 120. However, it is contemplated that a predicate calculation module adapted in accordance with the present invention may equally be implemented as a generally discrete, stand alone function element, or integrated within an alternative functional module.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediary components. Likewise, any two components so associated can also be viewed as being "operably connected", or "operably coupled", to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an". The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. An integrated circuit device (105) comprising at least one instruction processing module (100) arranged to perform branch predication, the at least one instruction processing module (100) comprising at least one predicate calculation module (150) arranged to:

   receive as an input at least one result vector (220) for a predicate function and at least one conditional parameter value (230) therefor; and
   output a predicate result value (240) from the at least one result vector (220) based at least partly on the at least one received conditional parameter value (230),

wherein the instruction processing module (100) further comprises at least one execution module (120) arranged to receive at least one predicate calculation instruction (200) comprising at least an indication (225) of the at least one result vector (220), and

wherein upon receipt of such an at least one predicate calculation instruction (200), the at least one execution module (120) is arranged to extract the at least indication (225) of the at least one result vector (220) therefrom and provide the at least one result vector (220) to the at least one predicate calculation module (150).

2. The integrated circuit device (105) of Claim 1 wherein the at least one predicate calculation module (150) comprises multiplexing circuitry.

3. The integrated circuit device (105) of Claim 1 or Claim 2 wherein the at least one result vector (220) comprises a predicate result value (240) for a plurality of permutations of the at least one conditional parameter value (230) within a defined Boolean function.

4. The integrated circuit device (105) of any preceding Claim wherein the at least one predicate calculation instruction (200) further comprises at least an indication (235) of the at least one conditional parameter value (230).

5. The integrated circuit device (105) of Claim 4, wherein the at least one execution module (120) is further arranged, upon receipt of such an at least one predicate calculation instruction (200), to extract the at least one indication (235) of the at least one conditional parameter value (230) therefrom and provide the at least one conditional parameter value (230) to the at least one predicate calculation module (150).

6. The integrated circuit device (105) of any of preceding Claims wherein the at least one predicate calculation instruction (200) further comprises an indication (245) of at least one storage location (155) at which the predicate result value (240) is to be stored.

7. The integrated circuit device (105) of Claim 6 wherein the at least one execution module (120) is further arranged, upon receipt of such an at least one predicate calculation instruction (200), to extract the indication (245) of the at least one storage location (155) and, upon output of the predicate result value (240) by the at least one predicate calculation module (150), store the predicate result value (240) within the storage location (155) in accordance with the extracted indication (245).

8. A method (400, 500) for calculating a predicate result value for use during branch predication within an instruction processing module (100), the method comprising:

receiving at least one result vector for a predicate function and at least one conditional parameter value (520) therefor; and

selecting a predicate result value from the at least one result vector based at least partly on the received at least one conditional parameter value (530),

receiving at least one predicate calculation instruction (200) comprising at least an indication (225) of the at least one result vector (220), and

upon receipt of such an at least one predicate calculation instruction (200),

extracting the at least indication (225) of the at least one result vector (220) therefrom and provide the at least one result vector (220) to the at least one predicate calculation module (150).

**Patentansprüche**

1. Eine integrierte Schaltkreisvorrichtung (105) aufweisend zumindest ein Instruktion verarbeitendes Modul (100), welches eingerichtet ist zum Ausführen von Zweig Prädikation, wobei zumindest ein Instruktion verarbeitendes Modul (100) aufweist zumindest ein Prädikat Kalkulationsmodul (150), welches eingerichtet zum:

Empfangen als eine Eingabe zumindest einen Ergebnisvektor (220) für eine Prädikat Funktion und zumindest einen konditionalen Parameterwert (230) dafür; und

Ausgeben eines Prädikat Ergebniswertes (240) von dem zumindest einen Ergebnisvektor (220) basierend zumindest teilweise auf zumindest einem empfangenen konditionalen Parameterwert (230),

wobei das Instruktion verarbeitende Modul (100) ferner aufweist zumindest ein Ausführungsmodul (120), welches eingerichtet ist zum Empfangen zumindest einer Prädikat Kalkulationsinstruktion (200), welche aufweist zumindest ein Anzeichen (225) von dem zumindest einen Ergebnisvektor (220), und

wobei nach Empfang von solch einer zumindest einen Prädikat Kalkulationsinstruktion (200) das zumindest eine Ausführungsmodul (120) eingerichtet ist zum

Extrahieren des zumindest einen Anzeichens (225) von dem zumindest einen Ergebnisvektor (220) davon und Bereitstellen des zumindest einen Ergebnisvektors (220) zu dem zumindest einen Prädikat Kalkulationsmodul (150).

2.  Die integrierte Schaltkreisvorrichtung (105) gemäß Anspruch 1,
    wobei das zumindest eine Prädikat Kalkulationsmodul (150) aufweist Multiplexing Schaltkreise.

3.  Die integrierte Schaltkreisvorrichtung (105) gemäß Anspruch 1 oder Anspruch 2,
    wobei der zumindest eine Ergebnisvektor (220) aufweist einen Prädikat Ergebniswert (240) für eine Mehrzahl von Permutationen von dem zumindest einen konditionalen Parameterwert (230) innerhalb einer definierten Booleschen Funktion.

4.  Die integrierte Schaltkreisvorrichtung (105) gemäß irgendeinem vorherigen Anspruch, wobei die zumindest eine Prädikat Kalkulationsinstruktion (200) ferner aufweist zumindest ein Anzeichen (235) von dem zumindest einen konditionalen Parameterwert (230).

5.  Die integrierte Schaltkreisvorrichtung (105) gemäß Anspruch 4,
    wobei das zumindest eine Ausführungsmodul (120) ferner eingerichtet ist nach Empfang von solch einer zumindest einen Prädikat Kalkulationsinstruktion (200) zum

    Extrahieren des zumindest einen Anzeichens (235) von dem zumindest einen konditionalen Parameterwert (230) davon und

    Bereitstellen des zumindest einen konditionalen Parameterwertes (230) zu dem zumindest einen Prädikat Kalkulationsmodul (150).

6.  Die integrierte Schaltkreisvorrichtung (105) gemäß irgendeinem vorherigen Anspruch, wobei die zumindest eine Prädikat Kalkulationsinstruktion (200) ferner aufweist ein Anzeichen (245) von zumindest einem Speicherort (155), bei welchem der Prädikat Ergebniswert (240) gespeichert werden soll.

7.  Die integrierte Schaltkreisvorrichtung (105) gemäß Anspruch 6,
    wobei das zumindest eine Ausführungsmodul (120) ferner eingerichtet ist nach Empfang von solch einer zumindest einen Prädikat Kalkulationsinstruktion (200) zum

    Extrahieren des Anzeichens (245) von dem zumindest einen Speicherort (155) und nach Ausgabe von dem Prädikat Ergebniswert (240) mittels des zumindest einen Prädikat Kalkulationsmoduls (150) Speichern des Prädikat Ergebniswertes (240) innerhalb des Speicherortes (155) in Übereinstimmung mit dem extrahierten Anzeichen (245).

8.  Ein Verfahren (400, 500) zum Berechnen eines Prädikat Ergebniswertes für Verwendung während Zweig Prädikation innerhalb eines Instruktion verarbeitenden Moduls (100), das Verfahren aufweisend:

    Empfangen zumindest eines Ergebnisvektors für eine Prädikat Funktion und zumindest einen konditionalen Parameterwert (520) dafür; und

    Selektieren eines Prädikat Ergebniswertes von dem zumindest einen Ergebnisvektor basierend zumindest teilweise auf dem empfangenen zumindest einen konditionalen Parameterwert (530),

    Empfangen zumindest einer Prädikat Kalkulationsinstruktion (200), welche aufweist zumindest ein Anzeichen (225) von dem zumindest einen Ergebnisvektor (220), und nach Empfang von solch einer zumindest einen Prädikat Kalkulationsinstruktion (200),

    Extrahieren des zumindest einen Anzeichens (225) von dem zumindest einen Ergebnisvektor (220) davon und Bereitstellen des zumindest einen Ergebnisvektors (220) zu dem zumindest einen Prädikat Kalkulationsmodul (150).

9.  Das Verfahren (400, 500) gemäß Anspruch 8,

wobei das Verfahren ferner aufweist

Ableiten des zumindest einen Ergebnisvektors, sodass der zumindest eine Ergebnisvektor aufweist Ergebniswerte für eine Mehrzahl von Permutationen von konditionalen Parameterwerten innerhalb einer definierten Booleschen Funktion.

## Revendications

1. Dispositif de circuit intégré (105) comprenant au moins un module de traitement d'instructions (100) agencé pour effectuer une prédiction de branchement, l'au moins un module de traitement d'instructions (100) comprenant au moins un module de calcul de prédicat (150) agencé pour :

   recevoir en tant qu'entrée au moins un vecteur de résultat (220) pour une fonction de prédicat et au moins une valeur de paramètre conditionnelle (230) pour celui-ci ; et

   émettre en sortie une valeur de résultat de prédicat (240) à partir de l'au moins un vecteur de résultat (220) sur la base, au moins en partie, de l'au moins une valeur de paramètre conditionnelle reçue (230),

   le module de traitement d'instructions (100) comprenant en outre au moins un module d'exécution (120) agencé pour recevoir au moins une instruction de calcul de prédicat (200) comprenant au moins une indication (225) de l'au moins un vecteur de résultat (220), et

   lors de la réception d'une telle au moins une instruction de calcul de prédicat (200), l'au moins un module d'exécution (120) étant conçu pour extraire l'au moins une indication (225) de l'au moins un vecteur de résultat (220) à partir de celui-ci et fournir l'au moins un vecteur de résultat (220) à l'au moins un module de calcul de prédicat (150).

2. Dispositif de circuit intégré (105) selon la revendication 1, l'au moins un module de calcul de prédicat (150) comprenant des circuits de multiplexage.

3. Dispositif de circuit intégré (105) selon la revendication 1 ou selon la revendication 2, l'au moins un vecteur de résultat (220) comprenant une valeur de résultat de prédicat (240) pour une pluralité de permutations de l'au moins une valeur de paramètre conditionnel (230) dans une fonction booléenne définie.

4. Dispositif de circuit intégré (105) selon n'importe quelle revendication précédente, l'au moins une instruction de calcul de prédicat (200) comprenant en outre au moins une indication (235) de l'au moins une valeur de paramètre conditionnelle (230).

5. Dispositif de circuit intégré (105) selon la revendication 4, l'au moins un module d'exécution (120) étant en outre agencé lors de la réception d'une telle au moins une instruction de calcul de prédicat (200), pour extraire l'au moins une indication (235) de l'au moins une valeur de paramètre conditionnel (230) à partir de celui-ci et fournir l'au moins une valeur de paramètre conditionnelles (230) à l'au moins un module de calcul de prédicat (150).

6. Dispositif de circuit intégré (105) selon l'une quelconque des revendications précédentes, l'au moins une instruction de calcul de prédicat (200) comprenant en outre une indication (245) d'au moins un emplacement de stockage (155) auquel la valeur de résultat de prédicat (240) doit être stockée.

7. Dispositif de circuit intégré (105) selon la revendication 6, l'au moins un module d'exécution (120) étant en outre agencé, lors de la réception d'une telle au moins une instruction de calcul de prédicat (200), pour extraire l'indication (245) de l'au moins un emplacement de stockage (155) et, lors de l'émission en sortie de la valeur de résultat de prédicat (240) par l'au moins un module de calcul de prédicat (150), stocker la valeur de résultat de prédicat (240) dans l'emplacement de stockage (155) conformément à l'indication extraite (245).

8. Procédé (400, 500) pour calculer une valeur de résultat de prédicat pour une utilisation pendant une prédiction de branchement dans un module de traitement d'instructions (100), le procédé comprenant :

   la réception d'au moins un vecteur de résultat pour une fonction de prédicat et d'au moins une valeur de paramètre conditionne (520) pour celui-ci ; et

   la sélection d'une valeur de résultat de prédicat à partir de l'au moins un vecteur de résultat sur la base, au moins en partie, de l'au moins une valeur de paramètre conditionnelles reçue (530),

   la réception d'au moins une instruction de calcul de prédicat (200) comprenant au moins une indication (225) de l'au moins un vecteur de résultat (220), et

lors de la réception d'une telle au moins une instruction de calcul de prédicat (200), l'extraction de l'au moins une indication (225) de l'au moins un vecteur de résultat (220) à partir de celui-ci et la fourniture de l'au moins un vecteur de résultat (220) à l'au moins un module de calcul de prédicat (150).

9. Procédé (400, 500) selon la revendication 8, le procédé comprenant en outre

la dérivation de l'au moins un vecteur de résultat de telle sorte que l'au moins un vecteur de résultat comprend des valeurs de résultat pour une pluralité de permutations de valeurs de paramètre conditionnelles dans une fonction booléenne définie.

**FIG. 1**

**FIG. 3**

310

(p0 || !((p1 ^ p2) && p3)) → p4

| p0, p1, p2, p3 | p4 |
|---|---|
| 0, 0, 0, 0 | 1 |
| 0, 0, 0, 1 | 1 |
| 0, 0, 1, 0 | 1 |
| 0, 0, 1, 1 | 0 |
| 0, 1, 0, 0 | 1 |
| 0, 1, 0, 1 | 0 |
| ..... | |
| 1, 1, 1, 1 | 1 |

220

#$ffd7

**200** PCALC p0,p1,p2,p3,#$ffd7,p4

235 · 225 · 245

EU

**230** p3, p2, p1, p0          **220** #$ffd7

**120**

Encoded immediate (#$ffd7)

**214**          **212**

p3,p2,p1,p0 → MUX          **210**

**150**

**216** → p4 result

**240** → p4

**240** p4

**FIG. 2**

410 START 400

420 DEFINE PREDICATE
BOOLEAN FUNCTION

430 DERIVE RESULT VECTOR FOR
PREDICATE BOOLEAN FUNCTION

440 END

## FIG. 4

510 RECEIVE PREDICATE
CALCULATION INSTRUCTION 500

520 RECEIVE PREDICATE RESULT VECTOR AND
CONDITIONAL PARAMETER VALUE(S)

530 SELECT A PREDICATE RESULT VALUE FROM
THE PREDICATE RESULTS VECTOR BASED
ON CONDITIONAL PARAMETER VALUE(S)

540 OUTPUT/STORE PREDICATE RESULT VALUE

550 END

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008021942 A